(19) 

**Europäisches Patentamt**
**European Patent Office**
**Office européen des brevets**

(11) **EP 4 219 007 A1**

(12) 

# EUROPEAN PATENT APPLICATION
published in accordance with Art. 153(4) EPC

(43) Date of publication:
**02.08.2023 Bulletin 2023/31**

(21) Application number: **21872288.2**

(22) Date of filing: **15.09.2021**

(51) International Patent Classification (IPC):
*B01J 39/07* (2017.01)   *B01J 39/18* (2017.01)
*B01J 41/07* (2017.01)   *B01J 41/12* (2017.01)
*B01J 49/53* (2017.01)   *B01J 49/57* (2017.01)
*B01J 49/85* (2017.01)   *C02F 1/42* (2023.01)
*C02F 1/461* (2023.01)

(52) Cooperative Patent Classification (CPC):
**B01J 39/07; B01J 39/18; B01J 41/07; B01J 41/12;**
**B01J 49/53; B01J 49/57; B01J 49/85; C02F 1/42;**
**C02F 1/461**

(86) International application number:
**PCT/JP2021/033933**

(87) International publication number:
**WO 2022/065158 (31.03.2022 Gazette 2022/13)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:  **23.09.2020  JP 2020158748**

(71) Applicant: **Panasonic Intellectual Property**
**Management Co., Ltd.**
**Osaka-shi, Osaka 540-6207 (JP)**

(72) Inventors:
• **MARUO Yuko**
 **Osaka-shi, Osaka 540-6207 (JP)**
• **YANO, Hiroshi**
 **Osaka-shi, Osaka 540-6207 (JP)**

(74) Representative: **Grünecker Patent- und**
**Rechtsanwälte**
**PartG mbB**
**Leopoldstraße 4**
**80802 München (DE)**

(54) **WATER SOFTENING DEVICE AND METHOD FOR REGENERATING SAME**

(57)     Provided is a water softening device including a water softening tank that softens raw water using a weakly acidic cation exchange resin, a pH adjustment tank, an electrolytic cell that produces acidic electrolyzed water, a conductivity measurement unit $S_1$ that measures conductivity of the raw water, a conductivity measurement unit $S_2$ that measures conductivity of soft water, a water flow amount detecting unit, and a control unit, wherein the control unit calculates a regeneration time for the weakly acidic cation exchange resin based on an amount of the hardness component adsorbed to the weakly acidic cation exchange resin calculated from a difference between the conductivity of the raw water and the conductivity of the soft water and from the accumulated water flow amount of the raw water, and performs a regeneration treatment of the weakly acidic cation exchange resin during the regeneration time.

FIG. 1

**Description**

TECHNICAL FIELD

The present disclosure relates to a water softening device and a regeneration method thereof.

BACKGROUND ART

Many water softening devices using cation exchange resins have been proposed. For example, it is known to use a cation exchange resin having sodium ions as a functional group (strongly acidic cation exchange resin) to obtain soft water through ion exchange of calcium ions and magnesium ions, which are hardness components included in raw water, for sodium ions.

The ion exchange capacity of a cation exchange resin decreases or disappears with continued use. That is, after all the sodium ions constituting a functional group of the cation exchange resin are exchanged with calcium ions and magnesium ions constituting hardness components, ion exchange becomes impossible. Thus, it is necessary to regenerate the cation exchange resin to make ion exchange possible again. A regeneration treatment includes passing recycled water such as saturated salt solution through the cation exchange resin. Such a regeneration treatment requires regular replenishment of salt according to the amount of soft water used and requires a lot of effort to replenish salt. In addition, since a large amount of salt is used, it causes an environmental problem.

Thus, as a method for regenerating a cation exchange resin without using salt, a method has been proposed that uses a weakly acidic cation exchange resin and regenerates the weakly acidic cation exchange resin using acidic electrolyzed water produced through electrolysis (see Patent Literatures 1 and 2). This method does not use salt and thus has achieved a certain result in that it does not cause an environmental problem.

CITATION LIST

PATENT LITERATURE

Patent Literature 1: Japanese Unexamined Patent Application Publication No. 2011-30973
Patent Literature 2: Japanese Unexamined Patent Application Publication No. 2009-165954

SUMMARY OF THE INVENTION

In the conventional water softening device using the weakly acidic cation exchange resin as described above, the amount of a hardness component attached to the weakly acidic cation exchange resin cannot be determined. Thus, when the weakly acidic cation exchange resin is regenerated, there is an issue because the amount of acidic electrolyzed water required for the regeneration treatment is unknown. That is, in order to ensure a perfect regeneration treatment, an excessive amount of acidic electrolyzed water is passed through, which wastes the power and time required for producing acidic electrolyzed water, and the water for producing acidic electrolyzed water. Conversely, if a small amount of acidic electrolyzed water is passed through, the regeneration treatment time becomes shorter but the regeneration treatment of the weakly acidic cation exchange resin becomes insufficient.

The present disclosure has been made in consideration of these issues, which are inherent in the related art. An object of the present invention is to provide a water softening device that uses acidic electrolyzed water for regenerating a weakly acidic cation exchange resin and is capable of suppressing excess and deficiency of the amount of acidic electrolyzed water used for a regeneration treatment of the weakly acidic cation exchange resin, and a regeneration method thereof.

In response to the above issues, a water softening device according to a first aspect of the present disclosure includes a water softening tank that softens raw water including a hardness component using a weakly acidic cation exchange resin, a pH adjustment tank that adjusts a pH of soft water produced in the water softening tank to a neutral range, an electrolytic cell that produces alkaline electrolyzed water and acidic electrolyzed water that is used for regenerating the weakly acidic cation exchange resin, at least one of (1) a conductivity measurement unit $S_1$ that measures conductivity of the raw water and a conductivity measurement unit $S_2$ that measures conductivity of soft water that has been obtained by going through the water softening tank and the pH adjustment tank, or (2) a hardness detecting unit that detects a hardness of the raw water or a hardness storage unit that stores a hardness of the raw water measured in advance, a conductivity measurement unit $S_1$ that measures conductivity of the raw water and a conductivity measurement unit $S_2$ that measures conductivity of soft water that has been obtained by going through the water softening tank and the pH adjustment tank, a water flow amount detecting unit that detects an accumulated water flow amount of the raw water going through the water softening tank in a predetermined period of time, and a control unit that controls at least a flow of the acidic electrolyzed water produced by the electrolytic cell to the water softening tank, wherein the control unit calculates a regeneration time for the weakly acidic cation exchange resin based on an amount of the hardness component adsorbed to the weakly acidic cation exchange resin calculated from a difference between the conductivity of the raw water measured by the conductivity measurement unit $S_1$ and the conductivity of the soft water measured by the conductivity measurement unit $S_2$, or the hardness of the raw water detected by the hardness detecting unit or the hardness of the raw water stored in the hardness storage unit, and from the accumulated water flow amount of the raw water detected by the water flow amount detecting unit, and performs control in such a manner that the acidic electrolyzed water is passed through the soft water softening tank to perform a regeneration treatment of the weakly acidic cation exchange resin during the regeneration time that has been calculated.

A according to a second aspect of the present disclosure includes a method for regenerating a weakly acidic cation exchange resin of a water softening device, the water softening device including a water softening tank that softens raw water including a hardness component using a weakly acidic cation exchange resin, a pH adjustment tank that adjusts a pH of soft water produced in the water softening tank to a neutral range, an electrolytic cell that produces alkaline electrolyzed water and acidic electrolyzed water that is used for regenerating the weakly acidic cation exchange resin, at least one of (1) a conductivity measurement unit $S_1$ that measures conductivity of the raw water and a conductivity measurement unit $S_2$ that measures conductivity of soft water that has been obtained by going through the water softening tank and the pH adjustment tank, or (2) a hardness detecting unit that detects a hardness of the raw water or a hardness storage unit that stores a hardness of the raw water measured in advance, a conductivity measurement unit $S_1$ that measures conductivity of the raw water and a conductivity measurement unit $S_2$ that measures conductivity of soft water that has been obtained by going through the water softening tank and the pH adjustment tank, and a water flow amount detecting unit that detects a water flow amount of the raw water going through the water softening tank, the method including calculating a regeneration time for the weakly acidic cation exchange resin based on a difference between the conductivity of the raw water measured by the conductivity measurement unit $S_1$ and the conductivity of the soft water measured by the conductivity measurement unit $S_2$, or the hardness of the raw water detected by the hardness detecting unit or the hardness of the raw water stored in the hardness storage unit, and on an accumulated water flow amount of the raw water detected by the water flow amount detecting unit, and performs a regeneration treatment of the weakly acidic cation exchange resin by passing the acidic electrolyzed water into the water softening tank during the regeneration time that has been calculated.

BRIEF DESCRIPTION OF DRAWINGS

[FIG. 1] FIG. 1 is a conceptual diagram illustrating an example of a water softening device according to the present embodiment.
[FIG. 2] FIG. 2 is a diagram illustrating a relationship between a hardness ion change amount and a conductivity change amount.
[FIG. 3] FIG. 3 is a conceptual diagram illustrating a modified example of the water softening device according to the present embodiment.
[FIG. 4] FIG. 4 is a conceptual diagram illustrating a modified example of the water softening device according to the present embodiment.
[FIG. 5] FIG. 5 is a conceptual diagram illustrating an example of an electrolytic cell according to the present embodiment.
[FIG. 6] FIG. 6 is a graph illustrating changes in a pH at a weakly acidic cation exchange resin with respect to a regeneration time for a weakly acidic cation exchange resin.
[FIG. 7] FIG. 7 is a graph illustrating changes in a pH at a weakly basic anion exchange resin with respect to a regeneration time for a weakly basic anion exchange resin.

DESCRIPTION OF EMBODIMENTS

A water softening device according to an embodiment and a regeneration method thereof are described below with reference to the drawings. Note that dimensional ratios in the drawings are exaggerated for convenience of the explanation and may differ from the actual ratios.

<Water softening device>

A water softening device according to the present embodiment includes a water softening tank that softens raw water including a hardness component using a weakly acidic cation exchange resin. Also, a pH adjustment tank is provided that adjusts the pH of soft water produced in the water softening tank to a neutral range. In addition, an electrolytic cell is provided that produces alkaline electrolyzed water and acidic electrolyzed water that is used for regenerating the weakly acidic cation exchange resin. Furthermore, at least one of the following (1) or (2) is provided.

(1) A conductivity measurement unit $S_1$ that measures the conductivity of raw water and a conductivity measurement unit $S_2$ that measures the conductivity of soft water that has been obtained by going through the water softening tank and the pH adjustment tank.
(2) A hardness detecting unit that detects the hardness of raw water or a hardness storage unit that stores the hardness of raw water measured in advance.

Moreover, a water flow amount detecting unit is provided that detects an accumulated water flow amount of raw water going through the water softening tank in a predetermined period. Moreover, a control unit is provided that controls at least the flow of acidic electrolyzed water produced by the electrolytic cell into the water softening tank. The control unit also calculates a regeneration time for the weakly acidic cation exchange resin based on the amount of the hardness component adsorbed to the weakly acidic cation exchange resin, and performs control in such a manner that acidic electrolyzed water is passed through the water softening tank to regenerate the weakly acidic cation exchange resin during the calculated regeneration time. The amount of the hardness component adsorbed to the weakly acidic cation exchange resin is calculated from a difference between the conductivity of raw water measured by the conductivity measurement unit $S_1$ and the conductivity of soft water measured by the conductivity measurement unit $S_2$, and the accumulated water flow amount of raw water detected by the water flow amount detecting unit. Alternatively, the amount of the hardness component adsorbed to the weakly acidic cation exchange resin is calculated from the hardness of raw water detected by the hardness detecting unit or the hardness of raw water stored in the hardness storage unit, and the accumulated water flow amount of raw water detected by the water flow amount detecting unit.

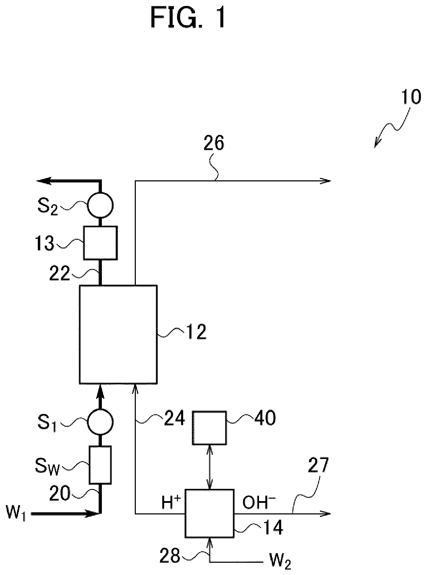

FIG. 1 conceptually illustrates elements of a water softening device 10 according to the present embodiment. The water softening device 10 includes a water softening tank 12, a pH adjustment tank 13, and an electrolytic cell 14. The water softening tank 12 is connected with a flow path 20 for passing raw water $W_1$ including a hardness component, and a flow path 22 for guiding the soft water obtained by going through the water softening tank 12 and the pH adjustment tank 13 to the outside. The flow path 20 is provided with a water flow amount detecting unit $S_w$ that detects an accumulated water flow amount of raw water Wi going through the water softening tank 12 in a predetermined period, and the conductivity measurement unit $S_1$ that measures the conductivity of raw water. The flow path 22 is provided with the conductivity measurement unit $S_2$ that measures the conductivity of soft water that has been obtained by going through the water softening tank 12 and the pH adjustment tank 13. The water softening tank 12 is further connected with a flow path 24 for passing acidic electrolyzed water produced in the electrolytic cell 14, and a flow path 26 for discharging acidic electrolyzed water including a hardness component after the weakly acidic cation exchange resin is regenerated in the water softening tank 12. The electrolytic cell 14 is connected with a flow path 28 for guiding water $W_2$ for producing electrolyzed water, and a flow path 27 for draining alkaline electrolyzed water produced simultaneously with the production of acidic electrolyzed water.

The electrolytic cell 14 is connected with a control unit 40, and the control unit 40 controls the flow of acidic electrolyzed water produced in the electrolytic cell 14 into the water softening tank 12. More specifically, when the weakly acidic cation exchange resin in the water softening tank 12 is regenerated, the control unit 40 calculates the amount of a hardness component adsorbed to the weakly acidic cation exchange resin based on a difference between the conductivity of raw water and the conductivity of soft water, and the accumulated water flow amount. Then, based on the calculated amount of the hardness component and the pH or flow rate of acidic electrolyzed water to be passed, the flow time of the acidic electrolyzed water, namely the regeneration time, is calculated. During the calculated regeneration time, control is performed in such a manner that the acidic electrolyzed water is passed through the weakly acidic cation exchange resin.

When raw water including a hardness component is softened to produce soft water in the water softening device 10 illustrated in FIG. 1, the raw water first passes through the weakly acidic cation exchange resin provided in the water softening tank 12. Here, cations, which constitute the hardness component in raw water, are exchanged with hydrogen ions by means of the weakly acidic cation exchange resin so that the raw water is softened. Then, the obtained soft water passes through the pH adjustment tank 13, and the pH is adjusted to a neutral range due to $H^+$ decreasing. Here, the pH in the neutral range is in a range of 5.8 to 8.6.

In contrast, when the weakly acidic cation exchange resin is regenerated, acidic electrolyzed water produced in the electrolytic cell 14 is passed into the water softening tank 12 and is made to pass through the weakly acidic cation exchange resin therein. That is, by passing acidic electrolyzed water through the weakly acidic cation exchange resin, cations (hardness component) adsorbed to the weakly acidic cation exchange resin react with hydrogen ions included in the acidic electrolyzed water through the ion-exchange reaction, and thus the weakly acidic cation exchange resin is regenerated. Then, the acidic electrolyzed water after going through the weakly acidic cation exchange resin and including cations is discharged through the flow path 26.

During the above-described regeneration treatment, the acidic electrolyzed water flows through the electrolytic cell 14, the flow path 24, the water softening tank 12, and the flow path 26 in this order using a pump (not illustrated).

In the present embodiment, in the regeneration treatment of the weakly acidic cation exchange resin, the control unit 40 controls the electrolytic cell 14, and the flow time, that is, the regeneration time, of the acidic electrolyzed water passed through the water softening tank 12 is set. More specifically, the control unit 40 preferably calculates the regeneration time for the weakly acidic cation exchange resin as follows. That is, the calculation is based on a relational equation of a difference ($\Delta C$) between the hardness component amount of the raw water and the hardness component amount of the soft water that has been obtained by going through the water softening tank and the pH adjustment tank, with respect to a difference ($\Delta S$) between the conductivity of the raw water and the conductivity of the soft water that has gone through the water softening tank and the pH adjustment tank. The relational equation is expressed as $\Delta C / \Delta S = \alpha$ ($\alpha$: proportionality constant). Specifically, the change amount in the hardness component before and after water softening is calculated from a difference between the conductivity of raw water measured by the conductivity measurement unit $S_1$ and the conductivity of soft water measured by the conductivity measurement unit $S_2$. Then, the regeneration time for the weakly acidic cation exchange resin is calculated from the calculated amount of change in the hardness component. Note that the difference $\Delta S$ between the conductivity of raw water and the conductivity of soft water that has gone through the water softening tank and the pH adjustment tank is also called a conductivity change amount $\Delta S$. The difference $\Delta C$ between the hardness component amount of the raw water and the hardness component amount of the soft water that has been obtained by going through the water softening tank and the pH adjustment tank is also called a hardness ion change amount $\Delta C$.

The method for calculating the regeneration time for the weakly acidic cation exchange resin will be described in detail below.

It is necessary to know the amount of the hardness component (hardness ions) attached to the weakly acidic cation exchange resin in order to suppress the excess and deficiency of the amount of acidic electrolyzed water required for regenerating the weakly acidic cation exchange resin. In the present embodiment, the conductivity of raw water before going through the water softening tank 12 and the conductivity of soft water after going through the water softening tank 12 and the pH adjustment tank are measured, and based on the difference therebetween, the amount of the hardness component attached to the weakly acidic cation exchange resin is calculated. That is, the hardness component amount can be determined in-line by using the weakly acidic cation exchange resin for water softening and measuring the conductivity of water before and after the water softening treatment. The principles will be described below.

When water including a hardness component is softened by using a weakly acidic cation exchange resin (RCOOH), the following ion exchange reaction proceeds.

$$Ca^{2+} + 2RCOOH \rightarrow (RCOO^-)zCa^{2+} + 2H^+$$

In addition, water generally includes an alkalinity component, $HCO_3^-$. When the $HCO_3^-$ component is present in the water, $H^+$ released by the ion-exchange reaction of the hardness component reacts with $HCO_3^-$, and $H_2CO_3$ produced through the reaction immediately changes to dissolved $CO_2$.

$$H^+ + HCO_3^- \rightarrow H_2CO_3 -+ CO_2 + H_2O$$

Here, the proportion of $HCO_3^-$ to the hardness ions varies depending on water quality, that is, where the raw water is taken. When an alkalinity component in the raw water is high, $HCO_3^-$ is more than twice as much as the hardness ions, and thus $H^+$ released from the weakly acidic cation exchange resin is consumed by $HCO_3^-$. When the content of an alkalinity component in the raw water is low, the content of $HCO_3^-$ is less than twice as much as that of the hardness ions, and $H^+$ remains without being consumed by $HCO_3^-$, resulting in an acidic pH range. In this case, the pH adjustment tank adjusts the pH of the soft water to be in a neutral range, and reduces the remaining $H^+$.

As described above, when an alkalinity component in raw water is high and a weakly acidic cation exchange resin is used for water softening, $H^+$ released through the ion exchange reaction reacts with $HCO_3^-$, and thus the concentration of ions in water decreases. Even when an alkalinity component in the raw water is low, the pH adjustment tank reduces the remaining $H^+$. Thus, in the water softening device according to the present embodiment, the difference in the conductivity of water before and after the water softening treatment has an equivalent relationship with the amount of decrease in hardness ions. Since the difference in conductivity has a proportional relationship with the amount of decrease in hardness ions, if the correlation between a change in $Ca^{2+}$ and $HCO_3^-$ and a change in conductivity is clarified in advance, it is possible to calculate the change amount in hardness ions based on the change in conductivity. The amount of a hardness component adsorbed to the weakly acidic cation exchange resin is calculated from the change amount in hardness ions and the accumulated water flow amount, and the regeneration time using acidic electrolyzed water is set according to the hardness component amount.

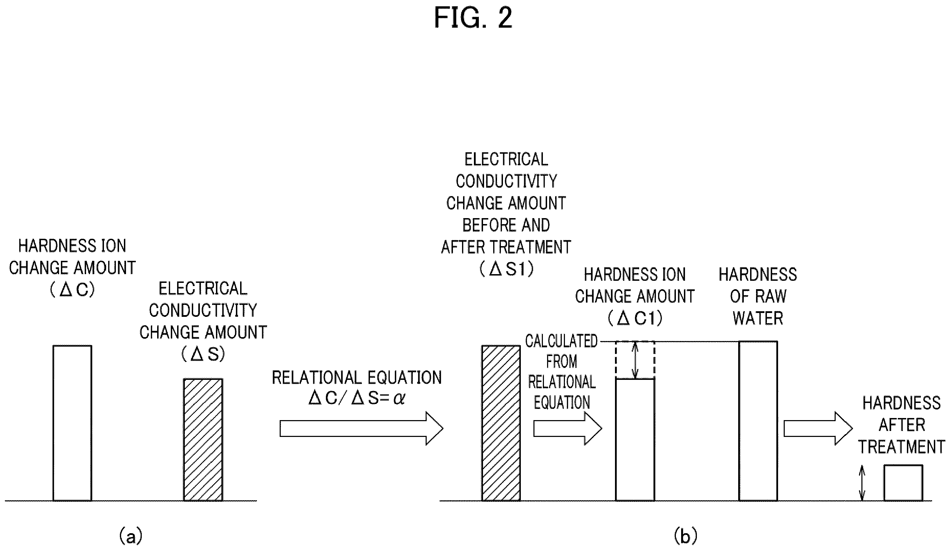

Moreover, a description will be given with reference to FIG. 2. As illustrated in FIG. 2(a), if a relationship between the hardness ion change amount $\Delta C$ and the conductivity change amount $\Delta S$ is illustrated with a bar graph, since they are in a proportional relationship, the relational equation $\Delta C / \Delta S = \alpha$ ($\alpha$: proportionality constant) is given. Also, as illustrated in FIG. 2(b), if a conductivity change amount $\Delta S1$ before and after the water softening treatment is obtained for certain raw water, it is possible to obtain a hardness ion change amount $\Delta C1$ from the above-described relational equation. Note that a difference between the hardness ion change amount $\Delta C1$ and the hardness of raw water is the hardness of soft water that has been obtained through the water softening treatment.

As described above, by measuring conductivity of water before and after the water softening treatment, the hardness component amount (that is, hardness) of the obtained soft water can be calculated. The hardness ion change amount $\Delta C1$ means a decrease amount in the hardness component during water softening and is equivalent to the amount of the hardness component adsorbed to the weakly acidic cation exchange resin. Thus, it is possible to obtain the amount of the hardness component adsorbed to the weakly acidic cation exchange resin from the difference in conductivity of water before and after water softening. In contrast, the hardness component adsorbed to the weakly acidic cation exchange resin is a component to be removed in the regeneration treatment, and the regeneration time for the weakly acidic cation exchange resin depends on the component amount. Therefore, it is possible to consider the amount of acidic electrolyzed water suitable for removing the hardness component of the component amount and to calculate the regeneration time based on the amount.

When the total change amount of the hardness component before and after water softening is C (mol), the pH of acidic electrolyzed water used for regenerating the weakly acidic cation exchange resin is x, and the flow rate of the acidic electrolyzed water is v (L/min), the control unit 40 preferably calculates the regeneration time according to the following equation 1. A previously measured value can also be used for the pH.

$$\text{Regeneration time (min)} = C \times 2 / (10^{-x} \times v) \qquad \text{[Equation 1]}$$

Three examples of calculating the regeneration time for the weakly acidic cation exchange resin will be shown below.

> (1) The total amount of the hardness component adsorption is calculated from the accumulated water flow amount and an average value of the amount of the adsorption hardness component, and the regeneration time is calculated from the calculated total amount of hardness adsorption.

The accumulated water flow amount is the total water flow amount of raw water used for the water softening treatment. More specifically, it is the total water flow amount of raw water from the time raw water is passed through the weakly acidic cation exchange resin for which regeneration treatment has been completed (or a new one) until just before the start of the regeneration treatment. The average value of the adsorption hardness amount is a value obtained by dividing the adsorption hardness amounts of the weakly acidic cation exchange resin measured every predetermined time by the number of measurements.

That is, the average value is used because the adsorption capacity of the weakly acidic cation exchange resin decreases when the water softening treatment is continued, and the adsorption amount of the hardness component is not constant. Furthermore, the total amount of hardness component adsorption is the total amount of the hardness component adsorbed from the time raw water is passed through the weakly acidic cation exchange resin for which regeneration treatment has been completed (or a new one) until just before the start of the regeneration treatment. Then, the total amount of hardness component adsorption can be calculated using the following equation.

$$\text{Total amount of hardness component adsorption (mol)} = \text{"accumulated water flow amount" (L)} \times \text{"average value of adsorption hardness amount" (mol/L)}$$

The regeneration time of a weakly acidic cation exchange resin can be calculated from the total amount of hardness component adsorption calculated as above. That is, when the total change amount in the hardness component before and after water softening is set as C (mol), the pH of acidic electrolyzed water used for the regeneration treatment is set as x, and the flow rate is set as V (L/min), the following equation can be used for the calculation. In the following equation, the hardness component is assumed to be calcium ions ($Ca^{2+}$) and magnesium ions ($Mg^{2+}$), which are divalent cations.

$$\text{Regeneration time (min)} = C \times 2 / (10^{-x} \times V)$$

(2) The total amount of hardness adsorption is calculated from the accumulated water flow amount, the adsorption hardness amount just before the start of the regeneration treatment, and a correction factor, and the regeneration time is calculated from the calculated total amount of hardness adsorption.

In (1) above, the "average value of adsorption hardness amount" in the calculation of the total amount of hardness component adsorption is obtained through multiple measurements, but in (2), it is calculated by multiplying the adsorption hardness amount just before the start of the regeneration treatment by the correction factor. In this point, (2) is different from (1) above. That is, the total amount of hardness component adsorption can be calculated using the following equation. A correction factor "a" can be obtained by accumulating experimental data. That is, experimental data on the adsorption hardness amount just before the regeneration treatment and the average value of the adsorption hardness amount are accumulated, and from a large amount of experimental data, the average value of the adsorption hardness amount / the adsorption hardness amount just before the regeneration treatment can be used as the correction factor "a".

$$\text{Total amount (mol) of hardness component adsorption} = \text{"accumulated water flow amount" (L)} \times \text{"adsorption hardness amount just before the regeneration treatment" (mol/L)} \times a \ (a > 0)$$

Then, based on the calculated total amount of hardness component adsorption, the regeneration time can be calculated as in (1) above.

A water softening device according to the present embodiment may include the hardness detecting unit that detects the hardness of raw water or the hardness storage unit that stores the hardness of raw water measured in advance, instead of or in conjunction with the conductivity measurement unit $S_1$ and the conductivity measurement unit $S_2$. That is, if the hardness of raw water flowing into the water softening tank is known, the total amount of hardness adsorption to the weakly acidic cation exchange resin can be calculated from the hardness of the raw water and the accumulated water flow amount into the water softening tank. Then, from the calculated total amount of hardness adsorption, the regeneration time for the weakly acidic cation exchange resin can be calculated as follows. Note that when the hardness detecting unit or the hardness storage unit is provided together with the conductivity measurement unit $S_1$ and the conductivity measurement unit $S_2$, both are not used at the same time, and the regeneration time for the weakly acidic cation exchange resin is calculated by either one.

(3) The total amount of hardness adsorption is calculated from the accumulated water flow amount and the hardness of raw water, and the regeneration time is calculated from the calculated total amount of hardness adsorption.

Assuming that the total amount of the hardness component in raw water flowed is equal to the total amount of the hardness component adsorbed to the weakly acidic cation exchange resin, the total amount of hardness component adsorption can be calculated by the following equation.

$$\text{Total amount (mol) of hardness component adsorption} = \text{"accumulated water flow amount" (L)} \times \text{"hardness of raw water" (mol/L)}$$

Based on the calculated total amount of hardness component adsorption, the regeneration time can be calculated as in (1) above.

As described above, it is possible to calculate the total amount of hardness component adsorption of the weakly acidic cation exchange resin by measuring the conductivity of water before and after water softening and calculating the difference therebetween, or by knowing the hardness of raw water. Then, a regeneration time is calculated from the calculated total amount of hardness component adsorption, the regeneration treatment of the weakly acidic cation exchange resin is performed during the regeneration time, and thus it is possible to suppress the excess and deficiency of the amount of acidic electrolyzed water. In turn, it is possible to suppress the power and time required for producing acidic electrolyzed water, and the waste of water for producing acidic electrolyzed water, while the weakly acidic cation exchange resin is sufficiently regenerated.

Elements of the water softening device according to the present embodiment will be described in detail below.

[Water softening tank]

The water softening tank 12 incudes a weakly acidic cation exchange resin therein and softens raw water including a hardness component using the weakly acidic cation exchange resin. Water including a hardness component flows into the water softening tank 12 through the flow path 20, passes through the weakly acidic cation exchange resin, and is discharged through the flow path 22 as soft water. That is, when raw water flowing from the flow path 22 is softened, the flow path 20 and flow path 22 are used. Note that in addition to hardness components, the water softening tank can also exchange other cations (for example, potassium ions, sodium ions, ammonium ions, and the like), and is not limited to water softening applications.

In contrast, the water softening tank 12 is connected with the flow path 24 through which acidic electrolyzed water is passed from the electrolytic cell 14, and the flow path 26 that guides acidic electrolyzed water having passed through the weakly acidic cation exchange resin to a mixing tank 16. When the weakly acidic cation exchange resin is regenerated, the flow path 24 and the flow path 26 are used.

As described above, in the water softening tank 12, the flow paths used in softening the raw water and in regenerating the weakly acidic cation exchange resin are different, and thus the necessary flow paths are selected and used by means of valves not illustrated. In other words, the water softening tank 12 includes a main flow path through which raw water flows and a regeneration flow path through which acidic electrolyzed water produced by the electrolytic cell 14 flows. The main flow path is a flow path from the flow path 20 to the flow path 22 through the water softening tank 12, and the regeneration flow path is a flow path from the flow path 24 to the flow path 26 through the water softening tank 12.

There are no restrictions on the weakly acidic cation exchange resin, and general-purpose ones can be used. Examples include one having a carboxyl group (-COOH) as an exchange group. Also, one may be used where a counter ion of the carboxyl group, which is a hydrogen ion (H$^+$), is a cation, such as a metal ion or an ammonium ion (NH$_4{}^+$).

[pH adjustment tank]

The pH adjustment tank, as described above, has a function of adjusting the pH of soft water to be in a neutral range and reducing the remaining H$^+$. That is, it is sufficient that the pH adjustment tank have a function of reducing the concentration of hydrogen ions, and in addition to using a weakly basic anion exchange resin described later, carbon dioxide gas deaeration, capacitive deionization, and the like can be mentioned.

[Electrolytic cell]

The electrolytic cell 14 electrolyzes introduced water W$_2$ into acidic electrolyzed water and alkaline electrolyzed water. Then, acidic electrolyzed water produced in the electrolytic cell 14 is discharged through the flow path 24, directed to the water softening tank 12, and used to regenerate the weakly acidic cation exchange resin. Alkaline electrolyzed water produced in the electrolytic cell 14 is discharged through a flow path not illustrated.

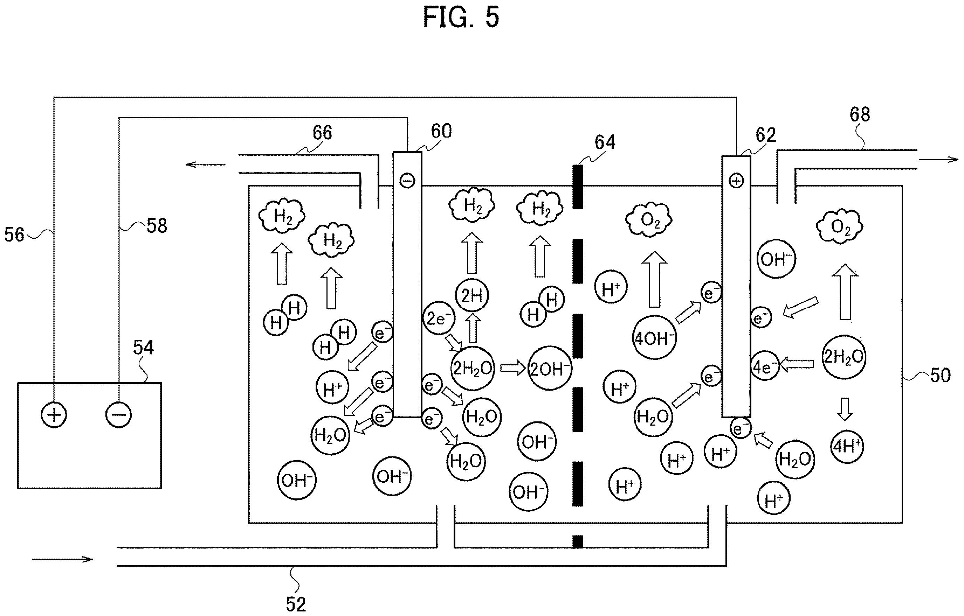

The electrolytic cell used in the water softening device 10 according to the present embodiment is not limited as long as it can produce acidic electrolyzed water and alkaline electrolyzed water. An example of the electrolytic cell 14 will be described with reference to FIG. 5.

The electrolytic cell illustrated in FIG. 5 includes an electrolyte chamber 50 for electrolysis of water, a power supply 54, an anode 62 connected to the anode of the power supply 54 through wiring 56, and a cathode 60 connected to the cathode of the power supply 54 through wiring 58. Inside the electrolyte chamber 50, an ion permeable membrane is separated by a partition wall 64. The right side in FIG. 5 constitutes an anode chamber, and the left side constitutes a cathode chamber. Water flows into the cathode chamber and the anode chamber from the flow path 52. The water in the cathode chamber is discharged as alkaline electrolyzed water from a flow path 66, and the water in the anode chamber is discharged as acidic electrolyzed water from a flow path 68, respectively.

Water introduced into the cathode chamber and the anode chamber of the electrolyte chamber 50 is electrolyzed by applying a voltage between the cathode 60 and the anode 62. In the electrolyte chamber 50, electrolysis of water produces hydroxide ions (OH$^-$) and hydrogen gas in the cathode chamber and hydrogen ions (H$^+$) and oxygen gas in the anode chamber. Then, alkaline electrolyzed water is produced in the cathode chamber, and acidic electrolyzed water is produced in the anode chamber. The alkaline electrolyzed water is discharged through the flow path 66, and the acidic electrolyzed water is discharged through the flow path 68.

When the acidic electrolyzed water produced in the electrolytic cell 14 includes more hydrogen ions, the weakly acidic cation exchange resin can be efficiently regenerated, so the lower the pH, the better.

[Conductivity measurement units $S_1$, $S_2$]

The conductivity measurement unit $S_1$ measures the conductivity of raw water flowing upstream of the water softening tank 12. In contrast, the conductivity measurement unit $S_2$ measures the conductivity of water after softening that is flowing downstream of the water softening tank 12. It is sufficient that both of the conductivity measurement units $S_1$ and $S_2$ can measure the conductivity, and for example, a conductivity meter and the like can be used. Then, each conductivity measured by the conductivity measurement units $S_1$ and $S_2$ is sent to the control unit 40 as an electrical signal.

[Hardness detecting unit, hardness storage unit]

The hardness detecting unit has a function of detecting the hardness of raw water Wi, and for example, a well-known water hardness meter or the like for electrically measuring the hardness of water can be used. Alternatively, the hardness of raw water may be calculated based on the conductivity of raw water measured by the conductivity measurement unit $S_1$. When the hardness of raw water is known in advance, the hardness storage unit that stores the hardness of the raw water can be provided. The hardness storage unit can be provided in a storage unit in the control unit described later.

[Water flow amount detecting unit]

The water flow amount detecting unit Sw detects the amount of raw water flowing into the water softening tank 12. It is sufficient that the water flow amount detecting unit Sw be capable of detecting the amount of raw water flowing, and a flow rate sensor or the like can be used. The water flow amount detected by the water flow amount detecting unit is sent to the control unit 40 as an electric signal. The control unit 40 is configured to accumulate and store the water flow amount in a predetermined period.

Note that the predetermined period is, for example, from the time raw water is passed through the weakly acidic cation exchange resin for which regeneration treatment has been completed (or a new one) until just before the regeneration treatment is performed.

[Control unit]

The control unit 40 performs the role of controlling the entirety of the water softening device 10. The control unit 40 receives signals of the conductivity from the conductivity measuring units S1 and S2, the water flow amount from the water flow amount detecting unit Sw, and the like. For example, there are provided an input/output unit that outputs a predetermined control signal, a storage unit that stores a calibration curve map indicating a relationship between the conductivity and the hardness, for example, a RAM that is used as a work area or stores calculation results, and a CPU that controls the entirety of the device. In the present embodiment, especially as described above, a regeneration time suitable for regenerating the weakly acidic cation exchange resin is calculated, and control is performed in such a manner that acidic electrolyzed water produced in the electrolytic cell 14 is passed through the water softening tank 12 during the calculated regeneration time.

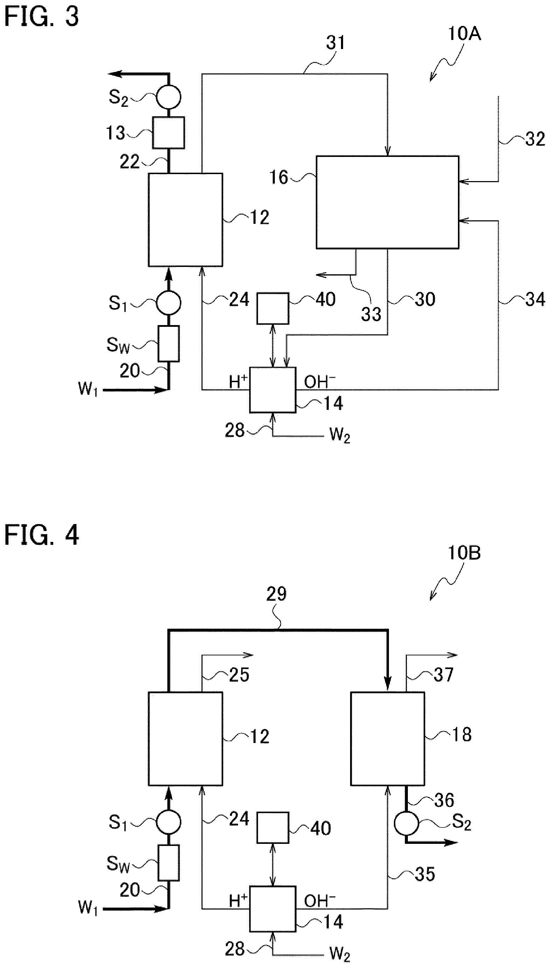

Next, a different form of the water softening device according to the present embodiment will be described with reference to FIG. 3. The water softening device according to the different form differs from the water softening device 10 illustrated in FIG. 1 in that a mixing tank is provided to mix alkaline electrolyzed water produced in the electrolytic cell with acidic electrolyzed water that has been used for regenerating a weakly acidic cation exchange resin. That is, as illustrated in FIG. 3, a water softening device 10A includes a mixing tank 16 for mixing alkaline electrolyzed water produced in the electrolytic cell 14 with acidic electrolyzed water that has been used for regenerating the weakly acidic cation exchange resin. The control unit 40 performs control in such a manner that mixed water produced by mixing alkaline electrolyzed water and acidic electrolyzed water in the mixing tank 16 is supplied to the electrolytic cell 14 during regeneration of the weakly acidic cation exchange resin. The mixed water produced in the mixing tank 16 is passed into the electrolytic cell 14 and is decomposed into acidic electrolyzed water and alkaline electrolyzed water in the electrolytic cell 14. Thus, in the water softening device 10 illustrated in FIG. 1, it is possible to reuse the water originally discharged and to reduce the consumption of water.

The water softening device 10A illustrated in FIG. 3 includes the water softening tank 12, the pH adjustment tank 13, the electrolytic cell 14, and the mixing tank 16. Among them, the water softening tank 12, the pH adjustment tank 13, and the electrolytic cell 14 are the same as those of the water softening device 10 illustrated in FIG. 1, and thus, surrounding members are given the same reference signs and their descriptions are omitted. The mixing tank 16 and its surroundings will be described below.

As illustrated in FIG. 3, the water softening tank 12 is connected with the flow path 24 for passing acidic electrolyzed water produced in the electrolytic cell 14 and a flow path 31 for passing to the mixing tank 16 acidic electrolyzed water that includes a hardness component after the weakly acidic cation exchange resin is regenerated in the water softening tank 12. The mixing tank 16 is further connected with a flow path 34 for passing alkaline electrolyzed water produced in the electrolytic cell 14, a flow path 30 for passing mixed water produced in the mixing tank 16 to the electrolytic cell 14, and a water supply path 32 for supplying water when the weakly acidic cation exchange resin is regenerated and water decreases. A drain path 33 for draining mixed water is connected to the mixing tank 16.

Note that when the flow path 31 is long enough to keep the amount of water required for the regeneration treatment therein, the flow path 31 can be directly connected to the electrolytic cell 14 without providing the mixing tank 16. In this case, the flow path 34 and the water supply path 32 are also directly connected to the flow path 31.

In contrast, when the weakly acidic cation exchange resin is regenerated, acidic electrolyzed water produced in the electrolytic cell 14 is passed into the water softening tank 12 so as to go through the weakly acidic cation exchange resin therein. Then, the acidic electrolyzed water including cations (hardness component) after going through the weakly acidic cation exchange resin is passed into the mixing tank 16 through the flow path 31. The alkaline electrolyzed water produced in the electrolytic cell 14 is passed into the mixing tank 16 through the flow path 34. That is, in the mixing tank 16, acidic electrolyzed water including cations is mixed with alkaline electrolyzed water. At this time, in the mixing tank 16, the hardness component, which is constituted by cations, in the acidic electrolyzed water reacts with alkaline electrolyzed water. For example, when the hardness component in the acidic electrolyzed water is constituted by calcium ions, alkaline electrolyzed water can produce calcium hydroxide and cause a reaction in which calcium carbonate is produced by combining with carbonate ions that are always present in water. Then, water (treated water) in the mixing tank 16 after the reaction is passed to the electrolytic cell 14. That is, the water in the mixing tank 16 is passed to the electrolytic cell 14 to produce acidic electrolyzed water, and the acidic electrolyzed water is used for regeneration of the weakly acidic cation exchange resin. Thus, the acidic electrolyzed water that has been used to regenerate the weakly acidic cation exchange resin is reused as acidic electrolyzed water in a state where the hardness component is diluted or changed to a reaction product by alkaline electrolyzed water in the mixing tank 16. Moreover, the acidic electrolyzed water to be reused is treated in the mixing tank 16, and the hardness component is reduced, so that the decrease in the regeneration efficiency can be suppressed. Moreover, since alkaline electrolyzed water is simultaneously produced when acidic electrolyzed water used to regenerate the weakly acidic cation exchange resin is produced, it is not necessary to provide a separate device for producing the alkaline electrolyzed water. In the water softening device 10A illustrated in FIG. 3, during regeneration of the weakly acidic cation exchange resin, the control unit 40 performs control in such a manner that mixed water produced by mixing alkaline electrolyzed water and acidic electrolyzed water in the mixing tank 16 is supplied to the electrolytic cell 14.

During the above-described regeneration treatment, acidic electrolyzed water flows in the order of the electrolytic cell 14, the flow path 24, the water softening tank 12, the flow path 31, the mixing tank 16, and the flow path 30 using a pump (not illustrated), and then flows into the electrolytic cell 14 again.

Next, a further different form of the water softening device according to the present embodiment will be described with reference to FIG. 4. The water softening device according to this different form differs from the water softening device 10 illustrated in FIG. 1 in that the pH adjustment tank including a weakly basic anion exchange resin is used and a flow path for passing alkaline electrolyzed water produced in the electrolytic cell to the pH adjustment tank is provided. That is, a water softening device 10B illustrated in FIG. 4 includes the water softening tank 12, the electrolytic cell 14, and a pH adjustment tank 18, and a flow path 35 for passing alkaline electrolyzed water produced in the electrolytic cell 14 is connected to the pH adjustment tank 18. Among them, the water softening tank 12 and the electrolytic cell 14 are the same as those of the water softening device 10 illustrated in FIG. 1, and thus, surrounding members are given the same reference signs and their descriptions are omitted. The pH adjustment tank 18 and its surroundings will be described below.

As illustrated in FIG. 4, the water softening tank 12 is connected with the flow path 20 for passing raw water Wi including a hardness component and a flow path 29 for guiding soft water obtained by going through the water softening tank 12 to the pH adjustment tank 18. Similar to the water softening device 10 illustrated in FIG. 1, the flow path 20 includes the water flow amount detecting unit Sw that detects an accumulated water flow amount of raw water $W_1$ going through the water softening tank in a predetermined period and the conductivity measurement unit $S_1$ that measures the conductivity of raw water.

In contrast, the pH adjustment tank 18 is further connected with a flow path 35 for passing alkaline electrolyzed water produced in the electrolytic cell 14 and a flow path 36 for guiding pH adjusted soft water to the outside. The flow path 36 includes the conductivity measurement unit $S_2$ that measures the conductivity of soft water that has gone through the pH adjustment tank 18.

The pH adjustment tank 18 is connected with a flow path 37 for discharging basic electrolyzed water including anions, such as chloride ions and sulfate ions, after regeneration treatment of the weakly basic anion exchange resin.

In the water softening device 10B illustrated in FIG. 4, the raw water Wi flows into the water softening tank 12, and the hardness component undergoes ion exchange through the weakly acidic cation exchange resin therein to become soft water. The soft water in this state has a low pH, which is in an acidic range, due to the influence of hydrogen ions produced by ion exchange. Then, the soft water is guided to the pH adjustment tank 18 through the flow path 29, anions are exchanged to hydroxide ions through the weakly basic anion exchange resin therein, and the pH rises to be in a neutral range. Thus, the raw water Wi becomes soft water in a neutral range by going through the water softening tank 12 and the pH adjustment tank 18.

In contrast, as with the weakly acidic cation exchange resin, the weakly basic anion exchange resin also needs to be regenerated because the ion exchange capacity decreases as water continues to flow therethrough. Thus, the water softening device 10B illustrated in FIG. 4 is preferably regenerated by alkaline electrolyzed water supplied from the electrolytic cell 14 through the flow path 35. That is, the control unit 40 performs control in such a manner that alkaline electrolyzed water produced in the electrolytic cell 14 is supplied to the pH adjustment tank 18 and the weakly basic anion exchange resin is regenerated during the regeneration of the weakly acidic cation exchange resin. Since the electrolytic cell 14 simultaneously produces acidic electrolyzed water and alkaline electrolyzed water, it is possible to simultaneously regenerate the weakly acidic cation exchange resin in the water softening tank 12 and the weakly basic anion exchange resin in the pH adjustment tank 18. Therefore, the control unit 40 preferably performs control in such a manner that alkaline electrolyzed water produced in the electrolytic cell 14 is supplied to the pH adjustment tank 18 and the weakly basic anion exchange resin is regenerated during the regeneration of the weakly acidic cation exchange resin.

In the water softening device 10B illustrated in FIG. 4, at the time of water softening, the raw water Wi flows in from the flow path 20, goes through the water flow amount detecting unit Sw and the conductivity measurement unit $S_1$, and flows into the water softening tank 12. Soft water obtained through the weakly acidic cation exchange resin in the water softening tank 12 is discharged through the flow path 29. The soft water further flows in the flow path 29 and is passed through the pH adjustment tank 18. In the pH adjustment tank 18, the pH of the soft water rises to a neutral range, and the soft water is discharged through the flow path 36 while going through the conductivity measurement unit $S_2$. That is, the soft water in the neutral range is discharged through the flow path 36 of the water softening device 10B and is provided as drinking water or the like.

In contrast, in the water softening device 10B, when the weakly acidic cation exchange resin in the water softening tank 12 is regenerated, the acidic electrolyzed water flows in the order of the electrolytic cell 14, the flow path 24, the water softening tank 12, and the flow path 22 using a pump (not illustrated) to regenerate the weakly acidic cation exchange resin in the water softening tank 12. In contrast, when the weakly basic anion exchange resin in the pH adjustment tank 18 is regenerated, the alkaline electrolyzed water flows in the order of the electrolytic cell 14, the flow path 35, the pH adjustment tank 18, and the flow path 38 to regenerate the weakly basic anion exchange resin in the pH adjustment tank 18.

In the water softening device 10B, the weakly basic anion exchange resin in the pH adjustment tank 18 is regenerated using the alkaline electrolyzed water at the same time that the weakly acidic cation exchange resin in the water softening tank 12 is regenerated. The regeneration time for the weakly basic anion exchange resin will be described below. As described above, the concentration of $H^+$ in the soft water obtained by going through the weakly acidic cation exchange resin depends on the amount of an alkalinity component that is deficient with respect to hardness ions. That is, the following relationship is established.

$$\text{(Molar concentration of hardness ions adsorbed to weakly acidic cation exchange resin)} \times 2 - \text{(molar concentration of } HCO_3^-\text{)} = \text{(molar concentration of } H^+ \text{ ions to be exchanged by weakly basic anion exchange resin)}$$

Accordingly, the following relationship is established.

$$\text{(Molar concentration of hardness ions adsorbed to weakly acidic cation exchange resin)} \times 2 > \text{(molar concentration of } H^+ \text{ ions exchanged by weakly basic anion exchange resin)} \cdots (1)$$

Since regeneration of a weakly acidic cation exchange resin requires two moles of $H^+$ for one mole of hardness ions,

(the number of moles of H$^+$ required for regeneration of weakly acidic

cation exchange resin) = (molar concentration of hardness ions adsorbed to weakly

acidic cation exchange resin) × 2 × (accumulated water flow amount) ··· (2)

Regeneration of a weakly basic anion exchange resin requires one mole of OH$^-$ for one mole of H$^+$ that has been ion-exchanged.

(Mole number of OH$^-$ required for regeneration of weakly basic anion

exchange resin) = (molar concentration of H$^+$ exchanged at weakly basic anion

exchange resin) × (accumulated water flow amount) ··· (3)

From the relationship of equation (1), the following relationship is established: (mole number of H$^+$ required for regeneration of weakly acidic cation exchange resin) > (mole number of OH$^-$ required for regeneration of weakly basic anion exchange resin). That is, the mole number of OH$^-$ required for the regeneration of the weakly basic anion exchange resin is smaller than the mole number of H$^+$ required for the regeneration of the weakly acidic cation exchange resin. Since equal amounts of OH$^-$ and H$^+$ are produced in the electrolytic cell 14, the time required for regenerating a weakly basic anion exchange resin using alkaline electrolyzed water is shorter than that for a weakly acidic cation exchange resin using acidic electrolyzed water. Thus, in the water softening device 10B, the control unit 40 controls the regeneration time for the weakly acidic cation exchange resin, and it is possible to also complete the regeneration of the weakly basic anion exchange resin within the controlled regeneration time.

As the weakly basic anion exchange resin used in the pH adjustment tank 18, one having a tertiary amino group as an anion exchange group is preferable.

The water softening device according to the present embodiment may further include a display unit that displays a comparison of the hardness of raw water calculated based on the conductivity of raw water measured by the conductivity measurement unit S$_1$ and the hardness of soft water calculated based on the conductivity of soft water measured by the conductivity measurement unit S$_2$. An aspect thereof will be described below.

As illustrated in FIG. 2(b), if the conductivity change amount $\Delta S1$ before and after the water softening treatment is obtained for certain raw water, the hardness ion change amount $\Delta C1$ can be obtained from the relational equation $\Delta C / \Delta S = \alpha$ ($\alpha$: proportionality constant). Then, a difference between the hardness ion change amount $\Delta C1$ and the hardness of the raw water is the hardness of soft water obtained through the water softening treatment. That is, if the conductivity change amount $\Delta S1$ before and after the water softening treatment is measured for certain raw water, the hardness of soft water can be obtained from the measured value. Thus, the conductivity and the hardness of water before and after water softening are correlated. Therefore, by storing the hardness of raw water relative to the conductivity of the raw water and the hardness of soft water relative to the conductivity of the soft water in the storage unit in the control unit 40 as calibration curves, it is possible to detect the hardness of each of the raw water and the soft water by measuring the conductivity of each of the raw water and the soft water. Then, by displaying the detected hardness on the display unit, a comparison of the hardness of the raw water and the hardness of the soft water obtained through the softening treatment can be displayed.

<Method for regenerating weakly acidic cation exchange resin for water softening device>

A method for regenerating a weakly acidic cation exchange resin for a water softening device according to the present embodiment is the method for regenerating the weakly acidic cation exchange resin for the water softening device according to the present embodiment described above. That is, the water softening device includes a water softening tank for softening raw water including a hardness component using a weakly acidic cation exchange resin. Also, a pH adjustment tank is provided that adjusts the pH of soft water produced in the water softening tank to a neutral range. Moreover, an electrolytic cell is provided that produces alkaline electrolyzed water and acidic electrolyzed water that is used for regenerating the weakly acidic cation exchange resin. Furthermore, at least one of the following (1) or (2) is provided.

(1) A conductivity measurement unit S$_1$ that measures the conductivity of raw water and a conductivity measurement unit S$_2$ that measures the conductivity of soft water that has been obtained by going through the water softening tank and the pH adjustment tank.
(2) A hardness detecting unit that detects the hardness of raw water or a hardness storage unit that stores the hardness of raw water measured in advance.

Moreover, a water flow amount detecting unit that detects the water flow amount of raw water going through the water softening tank is provided. Then, a regeneration time for the weakly acidic cation exchange resin is calculated based on a difference between the conductivity of raw water measured by the conductivity measurement unit $S_1$ and the conductivity of soft water measured by the conductivity measurement unit $S_2$, and the accumulated water flow amount of raw water detected by the water flow amount detecting unit. Alternatively, the regeneration time for the weakly acidic cation exchange resin is calculated based on the hardness of raw water detected by the hardness detecting unit or the hardness of raw water stored in the hardness storage unit, and the accumulated water flow amount of raw water detected by the water flow amount detecting unit. Further, the regeneration treatment of the weakly acidic cation exchange resin is performed by passing the acidic electrolyzed water through the water softening tank during the calculated regeneration time.

The water softening device in the method for regenerating the weakly acidic cation exchange resin of the water softening device according to the present embodiment corresponds to the water softening device according to the present embodiment described above. Since the water softening device has already been described, the description will be omitted.

As described above in the water softening device according to the present embodiment, it is possible to calculate the total amount of hardness component adsorption of the weakly acidic cation exchange resin by measuring the conductivity of water before and after water softening and calculating the difference therebetween, or by knowing the hardness of raw water. Then, a regeneration time is calculated from the calculated total amount of hardness component adsorption, the regeneration treatment of the weakly acidic cation exchange resin is performed during the regeneration time, and thus it is possible to suppress the excess and deficiency of the amount of acidic electrolyzed water. In turn, it is possible to suppress the power and time required for producing acidic electrolyzed water, and the waste of water for producing acidic electrolyzed water, while the weakly acidic cation exchange resin is sufficiently regenerated.

The verification data shows that the water softening device according to the present embodiment is capable of calculating the regeneration time of the weakly acidic cation exchange resin from the hardness component amount that is based on the difference between the conductivity of raw water and the conductivity of soft water.

(1) Change in conductivity through water softening treatment and relationship between conductivity and hardness ion concentration

The change in the hardness ion concentration and the conductivity during water softening was measured in the water softening device 10B illustrated in FIG. 4. That is, artificial hard water as raw water was passed through the water softening device 10B, and the conductivity and cation concentration of produced soft water were measured after 10, 20, 40, and 48 minutes. The results are in Table 1. Note that as a weakly acidic cation exchange resin, C104 manufactured by Purolite K.K. was used. As a weakly basic anion exchange resin, A845S manufactured by Purolite K.K. was used. As raw water, artificial hard water having an Na concentration of 1.86 mmol/L, an Mg concentration of 1.26 mmol/L, and a Ca concentration of 2.52 mmol/L was used.

[Table 1]

| Flow time (min) | Conductivity (m S/cm) | Na concentration (mmol/L) | Mg concentration (mmol/L) | Ca concentration (mmol/L) |
|---|---|---|---|---|
| 0(raw water) | 0.919 | 1.865 | 1.259 | 2.518 |
| 10 | 0.178 | 1.056 | 0.141 | 0. 274 |
| 20 | 0.218 | 1.469 | 0.166 | 0. 205 |
| 30 | 0.215 | 1. 623 | 0.174 | 0.178 |
| 38 | 0. 229 | 1. 677 | 0.185 | 0.162 |

It can be seen from Table 1 that passing water through the weakly acidic cation exchange resin and the weakly basic anion exchange resin reduces the Na concentration, the Mg concentration, and the Ca concentration compared with those of raw water. It can be seen that the conductivity also decreases compared with that of raw water. The raw water has a hardness of 378 mg/L while the treated water has a hardness of about 40 mg/L, which is softened by the water softening device 10B.

Meanwhile, $Na^+$ is a monovalent cation, $Mg^{2+}$ and $Ca^{2+}$ are divalent cations, and each cation has a different valence. Thus, in evaluating the change in conductivity, it is necessary to consider the contribution of the valence to the conductivity. Then, the contribution factor of conductivity, which takes into account the difference in the valence of each cation, was introduced, and the calculation was performed. The contribution factor of each cation was 0.1 for $Na^+$, 0.2 for $Mg^{2+}$, and 0.2 for $Ca^{2+}$. Since Ca and Mg are divalent cations, the contribution factor is twice that of Na. The conductivity is then determined by the following equation.

$$\text{Conductivity (mS/cm)} = \text{cation concentration (mmol/L)} \times \text{contribution factor}$$

From the above-described equation, the conductivity was calculated based on the values in Table 1. The calculation results are in Table 2 below.

[Table 2]

| Flow time (min) | Measured value (mS/cm) | Calculated value (mS/cm) |
|---|---|---|
| 0(raw water) | 0.919 | 0. 942 |
| 10 | 0.178 | 0.189 |
| 20 | 0.218 | 0. 221 |
| 30 | 0.215 | 0. 233 |
| 38 | 0. 229 | 0. 237 |

It can be seen from Table 2 that the calculated conductivity is almost consistent with the measured value. That is, it was shown that it was possible to calculate the concentration of adsorbed cations from the change in conductivity.

(2) Calculation of regeneration time for weakly acidic cation exchange resin

First, regeneration reactions of the weakly acidic cation exchange resin with respect to cations are as follows. $(2RCOO^-)Ca^{2+} + 2H^+ \rightarrow 2(RCOO^-H^+) + Ca^{2+}$ $(2RCOO^-)Mg^{2+} + 2H^+ \rightarrow 2(RCOO^-H^+) + Mg^{2+}$ $(2RCOO^-)Na^+ + H^+ \rightarrow RCOO^-H^+) + Na^+$

According to the above-described reaction equations, in the regeneration reaction of the weakly acidic cation exchange resin, 1 mole of protons is required for 1 mole of cations to regenerate a monovalent cation, and 2 moles of protons is required for 1 mole of cations to regenerate a divalent cation. That is, the amount of adsorption equivalent to a monovalent cation is important for calculating the regeneration time for a weakly acidic cation exchange resin. Thus, for example, if a weakly acidic cation exchange resin adsorbs 1 mol of $Na^+$ and 2 mol of $Ca^{2+}$, the amount of adsorption equivalent to a monovalent cation is 5 mol, and the required proton is 5 mol.

Next, estimation of the amount of cation adsorption from the conductivity change is discussed. As described above, contribution factors of $Mg^{2+}$ and $Ca^{2+}$ are twice as large as that of $Na^+$. Thus, when converting the concentration of $Ca^{2+}$ into the $Na^+$ equivalent, the concentration of $Ca^{2+}$ is doubled due to the difference in electric charge. This gives the following equation.

[Math. 1]

$$\text{Ca concentration in terms of Na ions} = \frac{\text{conductivity}}{\text{Na contribution factor} \times 2} \times 2$$

$$= \frac{\text{conductivity}}{\text{Na contribution factor}}$$

It can be seen from the above-described equation that the total cation concentration in terms of Na ions is obtained by dividing the conductivity by the Na contribution factor. Furthermore, as described above, the amount of adsorption equivalent to a monovalent cation is important for calculating the regeneration time for the weakly acidic cation exchange resin. Thus, the cation concentration in terms of Na ions becomes important. From the difference in conductivity, the cation concentration change in terms of Na ions can be calculated using the following equation.

[Math. 2]

Na ion equivalent adsorption concentration

$$= \frac{\text{conductivity of raw water} - \text{conductivity of treated water}}{\text{Na ion equivalent adsorption concentration}}$$

Then, the regeneration time for the weakly acidic cation exchange resin is calculated from the Na ion equivalent adsorption concentration. The conductivity of 4.4 L of water passed through the resin is 0.919 mS/cm for raw water and 0.208 mS/cm for produced soft water. From the above-described conductivity, the Na ion equivalent adsorption concentration is obtained as follows.

$$(0.919 - 0.208) \, (\text{mS/cm}) / 0.1 \, (\text{mS/cm/mmol/L}) = 7.1 \, \text{mmol/L}$$

Since the water flow amount is 4.4 L, the total Na equivalent adsorption mole number is 7.1 mmol/L $\times$ 4.4 L = 31.2 mmol.

In contrast, since the pH of acidic water used for the regeneration treatment is 2.1 and the flow rate is 0.1 (L/min), the time required for the regeneration of the weakly acidic cation exchange resin is 39.4 minutes according to equation (1) above.

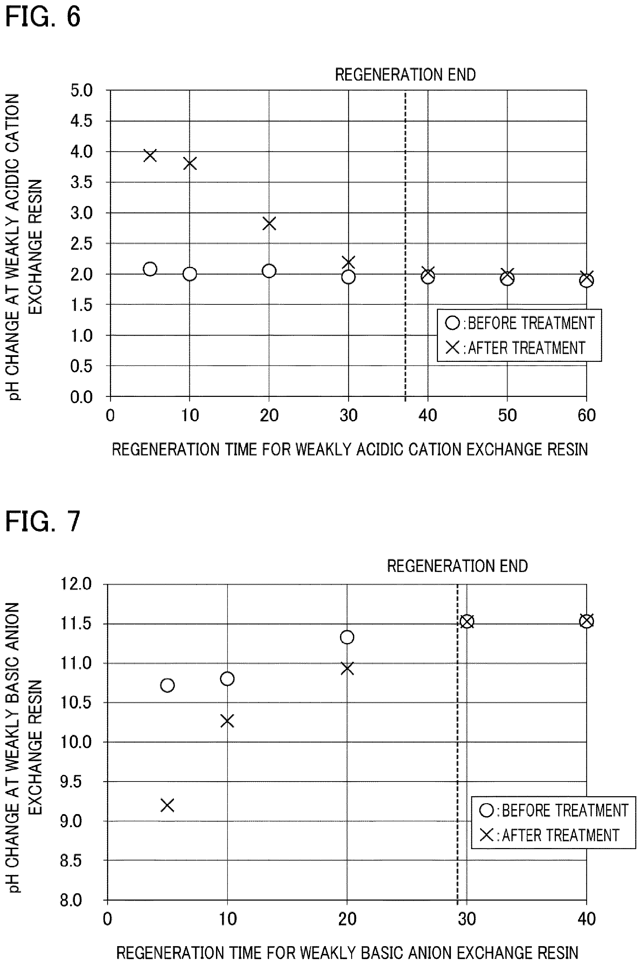

Furthermore, the regeneration time was measured when the actual regeneration treatment was performed. FIG. 6 illustrates pH changes in water before and after the treatment of the weakly acidic cation exchange resin relative to the regeneration time.

Regeneration ends when the pHs of water before and after the treatment match, and it can be seen from FIG. 6 that the regeneration ends after about 40 minutes. That is, the time required for the regeneration of the weakly acidic cation exchange resin, calculated as described above, is 39.4 minutes, which is almost in agreement with the measured value. That is, it was shown that it was possible to calculate a regeneration time using the above-described method for calculating a regeneration time.

In contrast, FIG. 7 illustrates pH changes in water before and after the treatment of the weakly basic anion exchange resin. Regeneration ends when the pHs of water before and after the treatment match, which is about 30 minutes. That is, as described above, it was also shown that the time required to regenerate a weakly basic anion exchange resin using alkaline electrolyzed water is shorter than that required to regenerate a weakly acidic cation exchange resin using acidic electrolyzed water. Thus, it is possible to also complete the regeneration of a weakly basic anion exchange resin within the regeneration time for a weakly acidic cation exchange resin.

The entire contents of Japanese Patent Application No. 2020-158748 (filed on September 23, 2020) are incorporated herein by reference.

INDUSTRIAL APPLICABILITY

The present disclosure is capable of providing a water softening device that uses acidic electrolyzed water for regenerating a weakly acidic cation exchange resin and is capable of suppressing excess and deficiency of the amount of acidic electrolyzed water required for a regeneration treatment of the weakly acidic cation exchange resin and providing a regeneration method of the water softening device.

REFERENCE SIGNS LIST

| | |
|---|---|
| 10 10A 10B | Water softening device |
| 12 | Water softening tank |
| 14 | Electrolytic cell |
| 16 | Mixing tank |
| 18 | pH adjustment tank |
| 40 | Control unit |

$S_1 S_2$           Conductivity detecting unit

Sw             Water flow amount detecting unit

**Claims**

1. A water softening device, comprising:

a water softening tank that softens raw water including a hardness component using a weakly acidic cation exchange resin;

a pH adjustment tank that adjusts a pH of soft water produced in the water softening tank to a neutral range;

an electrolytic cell that produces alkaline electrolyzed water and acidic electrolyzed water that is used for regenerating the weakly acidic cation exchange resin;

at least one of (1) a conductivity measurement unit $S_1$ that measures conductivity of the raw water and a conductivity measurement unit $S_2$ that measures conductivity of soft water that has been obtained by going through the water softening tank and the pH adjustment tank, or (2) a hardness detecting unit that detects a hardness of the raw water or a hardness storage unit that stores a hardness of the raw water measured in advance;

a water flow amount detecting unit that detects an accumulated water flow amount of the raw water going through the water softening tank in a predetermined period of time; and

a control unit that controls at least a flow of the acidic electrolyzed water produced by the electrolytic cell to the water softening tank, wherein

the control unit calculates a regeneration time for the weakly acidic cation exchange resin based on an amount of the hardness component adsorbed to the weakly acidic cation exchange resin calculated from a difference between the conductivity of the raw water measured by the conductivity measurement unit $S_1$ and the conductivity of the soft water measured by the conductivity measurement unit $S_2$, or the hardness of the raw water detected by the hardness detecting unit or the hardness of the raw water stored in the hardness storage unit, and from the accumulated water flow amount of the raw water detected by the water flow amount detecting unit, and performs control in such a manner that the acidic electrolyzed water is passed through the soft water softening tank to perform a regeneration treatment of the weakly acidic cation exchange resin during the regeneration time that has been calculated.

2. The water softening device according to claim 1, wherein the control unit calculates a change amount in the hardness component before and after water softening from a difference between the conductivity of the raw water measured by the conductivity measurement unit $S_1$ and the conductivity of the soft water measured by the conductivity measurement unit $S_2$, based on a relational equation ($\Delta C / \Delta S = \alpha$ ($\alpha$: proportionality constant)) of a difference ($\Delta C$) between a hardness component amount of the raw water and a hardness component amount of the soft water softened in the water softening tank with respect to a difference ($\Delta S$) between the conductivity of the raw water and the conductivity of the soft water that has been obtained by going through the water softening tank and the pH adjustment tank, and calculates the regeneration time for the weakly acidic cation exchange resin from the change amount in the hardness component that has been calculated.

3. The water softening device according to claim 2, wherein the control unit calculates the regeneration time using equation 1 below, when a total change amount of the hardness component before and after water softening is C (mol), a pH of the acidic electrolyzed water used for regenerating the weakly acidic cation exchange resin is x, and a flow rate of the acidic electrolyzed water is v (L/min).

$$\text{Regeneration time (min)} = C \times 2 / (10^{-x} \times v) \qquad \text{[Equation 1]}$$

4. The water softening device according to any one of claims 1 to 3, further comprising: a mixing tank that mixes alkaline electrolyzed water produced in the electrolytic cell with acidic electrolyzed water that has been used for regenerating the weakly acidic cation exchange resin, wherein

the control unit performs control in such a manner that mixed water produced by mixing the alkaline electrolyzed water with the acidic electrolyzed water in the mixing tank is supplied to the electrolytic cell while the weakly acidic cation exchange resin is regenerated.

5. The water softening device according to any one of claims 1 to 4, wherein the pH adjustment tank includes a weakly basic anion exchange resin.

6. The water softening device according to claim 5, wherein the control unit performs control in such a manner that, while the weakly acidic cation exchange resin is regenerated, alkaline electrolyzed water produced in the electrolytic cell is supplied to the pH adjustment tank and the weakly basic anion exchange resin is regenerated.

7. The water softening device according to any one of claims 1 to 6, further comprising: a display unit that displays a comparison of the hardness of the raw water calculated based on the conductivity of the raw water measured by the conductivity measurement unit $S_1$ and the hardness of the soft water calculated based on the conductivity of the soft water measured by the conductivity measurement unit $S_2$.

8. A method for regenerating a weakly acidic cation exchange resin of a water softening device, the water softening device including a water softening tank that softens raw water including a hardness component using a weakly acidic cation exchange resin; a pH adjustment tank that adjusts a pH of soft water produced in the water softening tank to a neutral range; an electrolytic cell that produces alkaline electrolyzed water and acidic electrolyzed water that is used for regenerating the weakly acidic cation exchange resin; at least one of (1) a conductivity measurement unit $S_1$ that measures conductivity of the raw water and a conductivity measurement unit $S_2$ that measures conductivity of soft water that has been obtained by going through the water softening tank and the pH adjustment tank, or (2) a hardness detecting unit that detects a hardness of the raw water or a hardness storage unit that stores a hardness of the raw water measured in advance; a conductivity measurement unit $S_1$ that measures conductivity of the raw water and a conductivity measurement unit $S_2$ that measures conductivity of soft water that has been obtained by going through the water softening tank and the pH adjustment tank; and a water flow amount detecting unit that detects a water flow amount of the raw water going through the water softening tank, the method comprising: calculating a regeneration time for the weakly acidic cation exchange resin based on a difference between the conductivity of the raw water measured by the conductivity measurement unit $S_1$ and the conductivity of the soft water measured by the conductivity measurement unit $S_2$, or the hardness of the raw water detected by the hardness detecting unit or the hardness of the raw water stored in the hardness storage unit, and on an accumulated water flow amount of the raw water detected by the water flow amount detecting unit, and performs a regeneration treatment of the weakly acidic cation exchange resin by passing the acidic electrolyzed water into the water softening tank during the regeneration time that has been calculated.

FIG. 1

# FIG. 2

(a)

(b)

## FIG. 3

## FIG. 4

FIG. 5

EP 4 219 007 A1

## FIG. 6

REGENERATION END

pH CHANGE AT WEAKLY ACIDIC CATION EXCHANGE RESIN (vertical axis, 0.0 to 5.0)

REGENERATION TIME FOR WEAKLY ACIDIC CATION EXCHANGE RESIN (horizontal axis, 0 to 60)

○ : BEFORE TREATMENT
✕ : AFTER TREATMENT

## FIG. 7

REGENERATION END

pH CHANGE AT WEAKLY BASIC ANION EXCHANGE RESIN (vertical axis, 8.0 to 12.0)

REGENERATION TIME FOR WEAKLY BASIC ANION EXCHANGE RESIN (horizontal axis, 0 to 40)

○ : BEFORE TREATMENT
✕ : AFTER TREATMENT

## INTERNATIONAL SEARCH REPORT

| International application No. |
|---|
| **PCT/JP2021/033933** |

**A.    CLASSIFICATION OF SUBJECT MATTER**

*B01J 39/07*(2017.01)i; *B01J 39/18*(2017.01)i; *B01J 41/07*(2017.01)i; *B01J 41/12*(2017.01)i; *B01J 49/53*(2017.01)i; *B01J 49/57*(2017.01)i; *B01J 49/85*(2017.01)i; *C02F 1/42*(2006.01)i; *C02F 1/461*(2006.01)i

FI:    C02F1/42 A; C02F1/42 B; B01J39/07; B01J39/18; B01J41/07; B01J41/12; B01J49/53; B01J49/57; B01J49/85; C02F1/461 A

According to International Patent Classification (IPC) or to both national classification and IPC

**B.    FIELDS SEARCHED**

Minimum documentation searched (classification system followed by classification symbols)

B01J39/07; B01J39/18; B01J41/07; B01J41/12; B01J49/53; B01J49/57; B01J49/85; C02F1/42; C02F1/461

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2009-165954 A (PANASONIC CORP) 30 July 2009 (2009-07-30)<br>claims 1-3, fig. 1 | 1-8 |
| Y | JP 2006-043549 A (HITACHI MAXELL LTD) 16 February 2006 (2006-02-16)<br>claims 1-7, fig. 1-4 | 1-8 |
| Y | JP 2010-194453 A (NOMURA MICRO SCI CO LTD) 09 September 2010 (2010-09-09)<br>paragraph [0021] | 1-8 |
| Y | JP 2005-334798 A (MIURA CO LTD) 08 December 2005 (2005-12-08)<br>paragraph [0016] | 1-8 |
| Y | JP 2003-220386 A (MIURA CO LTD) 05 August 2003 (2003-08-05)<br>paragraph [0027] | 1-8 |
| Y | JP 2019-162607 A (TOSHIBA CORP) 26 September 2019 (2019-09-26)<br>claim 1, fig. 1 | 1-8 |

☐ Further documents are listed in the continuation of Box C.         ☑ See patent family annex.

| *    Special categories of cited documents: | "T"    later document published after the international filing date or priority date and not in conflict with the application but cited to understand the principle or theory underlying the invention |
|---|---|
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **22 October 2021** | **02 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/033933**

| Patent document cited in search report | | | Publication date (day/month/year) | Patent family member(s) | Publication date (day/month/year) |
|---|---|---|---|---|---|
| JP | 2009-165954 | A | 30 July 2009 | (Family: none) | |
| JP | 2006-043549 | A | 16 February 2006 | (Family: none) | |
| JP | 2010-194453 | A | 09 September 2010 | (Family: none) | |
| JP | 2005-334798 | A | 08 December 2005 | (Family: none) | |
| JP | 2003-220386 | A | 05 August 2003 | (Family: none) | |
| JP | 2019-162607 | A | 26 September 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011030973 A
- JP 2009165954 A
- JP 2020158748 A